Europäisches Patentamt

European Patent Office

Office européen des brevets

(11) Numéro de publication: **0 453 975 A1**

## (12) DEMANDE DE BREVET EUROPEEN

(21) Numéro de dépôt: **91106283.4**

(22) Date de dépôt: **19.04.91**

(51) Int. Cl.5: **B31B 5/36**, F16H 7/02

(30) Priorité: **26.04.90 CH 1417/90**

(43) Date de publication de la demande:
**30.10.91 Bulletin 91/44**

(84) Etats contractants désignés:
**AT BE DE DK ES FR GB IT LU NL SE**

(71) Demandeur: **BOBST S.A.**
**Case Postale**
**CH-1001 Lausanne(CH)**

(72) Inventeur: **Seiler, Alain**
**Avenue Général-Guisan 46**
**CH-1800 Vevey(CH)**

(74) Mandataire: **Colomb, Claude**
**BOBST S.A., Service des Brevets, Case**
**Postale**
**CH-1001 Lausanne(CH)**

(54) **Dispositif d'entraînement de vis de déplacement d'une pièce dans une machine de traitement d'éléments en plaque.**

(57) Un dispositif d'entraînement en rotation simultanée d'au moins deux vis (31, 32) tenues parallèles au sein d'une machine comprend un arbre tournant (60) maintenu au sein de la machine de telle sorte qu'il passe à proximité de chacune des vis de déplacement (31, 32). Une manivelle (26) permet de tourner l'une des vis. A chaque proximité de l'arbre (60) avec une vis (31) sont disposées au moins une paire de poulies identiques crantées : l'une (48) sur l'arbre dont elle est solidaire en rotation, l'autre (44) sur la vis (31) dont elle est également solidaire en rotation. Une courroie crantée vrillée (40) relie ensemble les deux poulies (44, 48).

Fig. 1

Rank Xerox (UK) Business Services

La présente invention concerne un dispositif de déplacement en translation latérale d'une pièce longitudinale dans une machine plieuse-colleuse pour la production d'emballages, lequel dispositif comprend deux ou plusieurs vis tenues dans la machine parallèles mais libres en rotation avec leur partie filetée engagée dans des orifices taraudés transversaux en correpondance de la pièce longitudinale. La présente invention se rapporte plus particulièrement au dispositif permettant d'entraîner simultanément en rotation toutes les vis engagées dans la pièce longitudinale afin de lui appliquer un mouvement de translation latérale uniforme. Un tel dispositif de déplacement se rencontre, par exemple mais non exclusivement, dans une station de transport d'une machine à traiter des éléments en plaque, telle qu'une plieuse-colleuse, comprenant des transporteurs sans fin à courroie installés sur des longerons eux-mêmes montés en coulissement au travers de paliers sur des traverses, le dispositif permettant alors de modifier le positionnement de ces longerons par rapport au bâti de la machine en fonction de la découpe à traiter.

Actuellement, on munit chaque extrémité de vis d'une roue dentée que l'on relie toutes ensemble au moyen d'une chaîne. Ainsi, tout mouvement de rotation appliqué à l'une des vis, au moyen d'une manivelle par exemple, se répercute automatiquement sur les autres vis. Toutefois, dès que la pièce longitudinale à déplacer latéralement est particulièrement longue, tel qu'un longeron supportant un transporteur sans fin de longueur supérieure à 2 m 50, on constate un certain jeu inévitable dans la chaîne qui se traduit par des quantités de mouvements rotatifs inégaux pour chacune des vis. Le longeron se déplaçant de travers et s'arc-boutant, le déplacement latéral devient saccadé et très imprécis. On en arrive alors à devoir déplacer le longeron un peu au-delà de la position désirée pour revenir en arrière, ce qui annule légèrement les imprécisions. Ce tour de main particulier requiert une certaine expérience.

Le but de la présente invention est d'obvier le problème précité en proposant un dispositif d'entraînement en rotation simultanée d'au moins deux vis parallèles de déplacement d'une pièce dans une machine qui assure une meilleure coordination entre les vis. Bien évidemment, ce dispositif doit rester assez simple pour ne pas encombrer inutilement le bâti de la machine et pour pouvoir être réalisé à un coût raisonnable.

Ces buts sont réalisés grâce à un dispositif d'entraînement d'au moins deux vis tenues parallèles au sein d'une machine, lesquelles vis permettent le déplacement en translation latérale d'une pièce longitudinale de par l'engagement de leur partie filetée dans des orifices taraudés transversaux en correspondance de la pièce longitudinale, comprenant :

- un arbre tournant tenu au sein de la machine de telle sorte qu'il passe à proximité de chacune des vis de déplacement,
- des moyens d'entraînement en rotation de l'une des vis ou de l'arbre, et
- des moyens mécaniques, permettant de transmettre à chaque vis le mouvement rotatif de l'arbre.

Ainsi, en optimisant en fonction de la longueur nécessaire les autres paramètres de l'arbre : son matériau, son diamètre extérieur, voire son diamètre intérieur si l'arbre est creux, il est possible d'obtenir une très faible déformation en torsion en bout d'arbre qui se compare très favorablement avec le jeu inhérent d'une chaîne conventionnelle. Avantageusement, les moyens mécaniques permettant de transmettre à chaque vis le mouvement rotatif de l'arbre comprennent, à chaque proximité de l'arbre avec une vis, une paire de poulies crantées identiques : l'une sur l'arbre dont elle est solidaire en rotation, l'autre sur la vis dont elle est également solidaire en rotation, ainsi qu'une courroie crantée vrillée reliant ensemble les deux poulies.

L'emploi de courroies et poulies crantées pour transmettre un couple de rotation sur une distance maintenant réduite permet la répercussion exacte du mouvement initial, et ce avec un encombrement réduit et à frais raisonnables. De plus, la transmission étant devenue plus exacte, le longeron ne s'arc-boute pratiquement plus, donc les efforts mécaniques nécessaires sont devenus suffisamment faibles et on peut envisager avec confiance des dimensions plus réduites pour l'arbre et les poulies.

De préférence, l'arbre est orienté orthogonalement aux vis et les moyens mécaniques comprennent, à chaque proximité de l'arbre avec une vis, une double paire de poulies crantées identiques : deux poulies sur l'arbre dont l'une est folle, l'autre solidaire en rotation, deux poulies sur la vis dont l'une est également folle, l'autre solidaire en rotation, ainsi qu'une courroie crantée passant successivement de la poulie solidaire de l'arbre à la poulie folle de la vis puis à la poulie folle de l'arbre puis à la poulie solidaire de la vis et de retour à la poulie solidaire de l'arbre.

Si l'on fixe l'écartement entre deux poulies à une valeur équivalant au diamètre de ces mêmes poulies, alors la courroie n'effectue qu'un quart de tour sur elle même à chaque passage d'une poulie à l'autre, ce qui augmente notablement sa durée de vie, et ce au prix d'une complexité somme toute minime. Utilement, les moyens d'entraînement en rotation peuvent être réduits à une simple manivelle ou un moteur portatif accouplé à volonté à l'extrémité d'une vis.

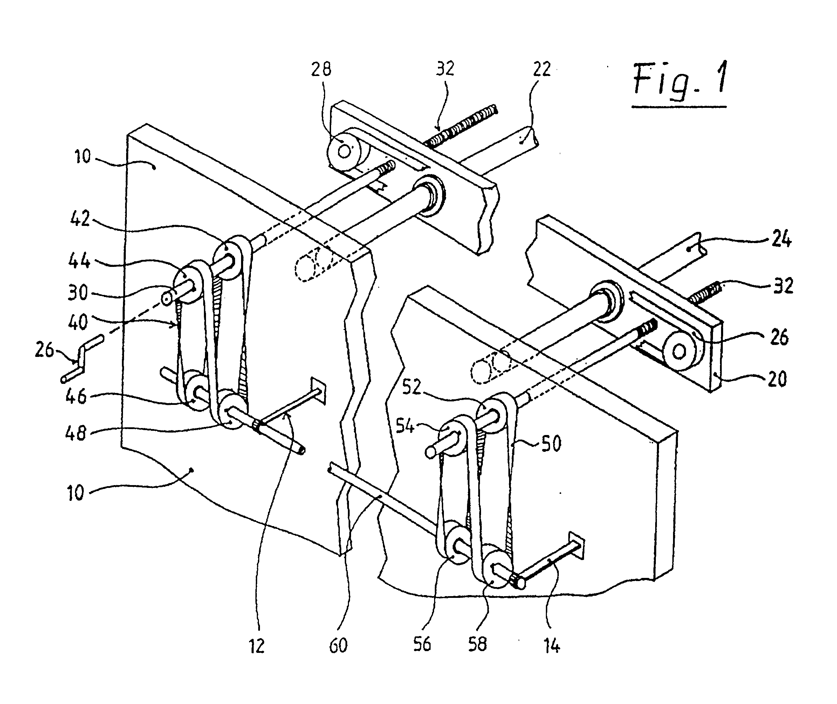

L'invention est décrite ci-après de façon plus détaillée à l'aide d'un exemple d'exécution sans caractère limitatif appliqué au déplacement d'un longeron supportant un transporteur sans fin à courroie et illustré sur la figure unique annexée présentant une vue partielle en perspective.

Sur la figure annexée, la pièce longitudinale à déplacer latéralement est un longeron 20 supportant une courroie de transport sans fin 26 passant par au moins deux poulies d'extrémité 28. Ce longeron 20 est monté en coulissement latéral le long de deux traverses 22 et 24 solidaires du bâti 10 de la machine.

Le mouvement latéral du longeron 20 est contrôlé par deux vis parallèles 31 et 32 dont les parties filetées sont respectivement engagées dans des orifices taraudés transversaux du longeron 20, lesquelles vis sont par ailleurs tenues fixes en translation longitudinale mais mobiles en rotation par le bâti 10. Bien évidemment, la liaison entre les parties filetées et les orifices taraudés du longeron 20 peut être améliorée par des roulements à billes ou à rouleaux.

Comme bien illustré sur la figure annexée, le dispositif d'entraînement simultané des vis 31 et 32 comprend d'abord un arbre 60 tenu au bâti 10 par plusieurs supports 12 et 14, représentés ici schématiquement, de telle sorte qu'il reste fixe en translation longitudinale mais mobile en rotation. Cet arbre 60 passe à proximité des vis 31 et 32 c'est-à-dire à une distance comprise entre 20 et 50 cm. De plus, et tel que bien visible sur la figure, cet arbre 60 est disposé horizontalement le long du bâti 10 alors que les vis parallèles 31 et 32 sont disposées également horizontalement mais transversalement par rapport au même bâti 10. De ce fait, l'arbre 60 se retrouve orthogonal simultanément par rapport aux vis 31 et 32.

L'arbre 60 est muni à proximité de la vis 31 d'une paire de poulies crantées dont la poulie 48 est clavetée à l'arbre, donc solidaire en rotation, et dont l'autre poulie 46 est folle, donc peut tourner librement. En correspondance, la vis 31 est également munie à proximité de l'arbre 60 d'une paire de poulies crantées dont celle vers la gauche 44 est clavetée et celle vers la droite 42 libre de tourner. Une courroie 40 passe alors d'une poulie à l'autre en n'effectuant qu'un quart de tour sur elle même, c'est-à-dire que quittant la poulie clavetée 48 de l'arbre 60 elle passe autour de la poulie folle 42 de la vis, pour ensuite passer autour de la poulie folle 46 de l'arbre 60, continuer autour de la poulie clavetée 44 de la vis, avant de retourner vers la poulie clavetée 48 de l'arbre. Grâce à ce dispositif, tout mouvement de rotation appliqué à la vis 31 à l'aide d'une manivelle 26 engagée à l'extrémité 30 de la vis 31 se répercute immédiatement et intégralement sur l'arbre 60. On retrouve un même dispositif de double paire de poulies crantées 52,54,56,58 et courroie crantée 50 entre l'arbre 60 et la seconde vis de déplacement 32. Le mouvement rotatif induit dans l'arbre 60 se trouve alors aussi intégralement répercuté dans la vis de déplacement 32.

L'arbre 60 étant unitaire et les dispositifs d'entraînement entre l'arbre et les vis étant identiques, on comprend qu'il est équivalent d'agir avec la manivelle 26 sur la vis 31 ou la vis 32. Si l'encombrement des autres organes mécaniques disposés sur le bâti le permet, il peut également être avantageux d'agir directement sur l'arbre 60 avec la manivelle 26. En alternative de la manivelle 26, on peut également employer un petit moteur électrique portatif dont on bloque le mandrin directement à l'extrémité 30 de la vis 31.

De nombreuses améliorations peuvent être apportées à ce dispositif d'entraînement dans le cadre de cette invention.

## Revendications

1. Dispositif d'entraînement en rotation simultanée d'au moins deux vis (31, 32) tenues parallèles au sein d'une machine de traitement d'éléments en plaque, lesquelles vis permettent le déplacement en translation latérale d'une pièce longitudinale (20) de par l'engagement de leur partie filetée dans des orifices taraudés transversaux en correspondance de la pièce longitudinale (20), caractérisé en ce qu'il comprend :
   - un arbre tournant (60) tenu au sein de la machine de telle sorte qu'il passe à proximité de chacune des vis de déplacement (31, 32),
   - des moyens d'entraînement en rotation (26) de l'une des vis (31) ou de l'arbre (60), et
   - des moyens mécaniques (40/44/48,50/54/58) permettant de transmettre à chaque vis (31,32) le mouvement rotatif de l'arbre (60).

2. Dispositif selon la revendication 1, caractérisé en ce que les moyens mécaniques comprennent, à chaque proximité de l'arbre (60) avec une vis (31), une paire de poulies crantées identiques : l'une (48) sur l'arbre dont elle est solidaire en rotation, l'autre (44) sur la vis (31) dont elle est également solidaire en rotation, ainsi qu'une courroie crantée vrillée (40) reliant ensemble les deux poulies (44,48).

3. Dispositif selon la revendication 1, caractérisé en ce que les moyens d'entraînement sont une manivelle (26) ou un moteur portatif pouvant être accouplés à l'extrémité (30) d'une vis.

_Fig. 1_

EP 0 453 975 A1

**Office européen
des brevets**

# RAPPORT DE RECHERCHE
# EUROPEENNE

Numéro de la demande

## EP 91 10 6283

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 931 277 (BOMBARD)<br>* Colonne 6, lignes 19-30; figure 14 *<br>— — — | 1,3 | B 31 B 5/36<br>F 16 H 7/02 |
| X | FR-A-2 407 069 (MARTIN)<br>* Revendication 1; fig. *<br>— — — | 1,3 | |
| A | US-A-3 026 737 (BERG)<br>* Figure 2 *<br>— — — | 2 | |
| A | US-A-3 365 966 (HEYER)<br>* Figure 1 *<br>— — — | 2 | |
| A | US-A-1 955 398 (WERNER)<br>* Figure 1 *<br>— — — | 3 | |
| A | US-A-4 315 751 (CONRAD)<br>— — — | | |
| A | US-A-3 656 416 (BAUM)<br>— — — — — | | |

|  | DOMAINES TECHNIQUES RECHERCHES (Int. Cl.5) |
|---|---|
|  | B 31 B<br>F 16 H |

Le présent rapport de recherche a été établi pour toutes les revendications

| Lieu de la recherche | Date d'achèvement de la recherche | Examinateur |
|---|---|---|
| La Haye | 12 juillet 91 | PEETERS S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant